# EUROPÄISCHE PATENTSCHRIFT

(11) **EP 4 160 845 B1**
(45) Veröffentlichungstag und Bekanntmachung des Hinweises auf die Patenterteilung: **17.04.2024**
(21) Anmeldenummer: 21199680.6
(22) Anmeldetag: 29.09.2021
(51) Int. Cl.: H02J 1/08, B61L 7/06, B61L 19/08, B61L 19/06

(54) **SYSTEM ZUM KONTROLLIERTEN STARTEN UND BETREIBEN EINES REDUNDANT AUSGEFÜHRTEN ENERGIEBUSSES**
SYSTEM FOR CONTROLLED STARTING AND OPERATING OF A REDUNDANT ENERGY BUS
SYSTÈME DE DÉMARRAGE CONTRÔLÉ ET DE FONCTIONNEMENT D'UN BUS D'ÉNERGIE REDONDANT

(43) Veröffentlichungstag der Anmeldung: 05.04.2023
(73) Patentinhaber: Siemens Mobility AG, 8304 Wallisellen (CH)
(72) Erfinder: Hediger, Martin, 8700 Küsnacht (CH)
(74) Vertreter: Siemens Patent Attorneys

(56) Entgegenhaltungen:
- EP-A1- 3 247 015
- EP-B1- 3 415 399

## Beschreibung

Die vorliegende Erfindung bezieht sich auf ein System zum kontrollierten Starten und Betreiben eines zur ausfallsicheren Versorgung einer Anzahl von elektrischen Verbrauchern vorgesehenen redundant ausgeführten Energiebusses.

Elektrische Verbraucher, wie dezentrale Funktionseinheiten im schienengebundenen Verkehr, werden im Besonderen in Schienenverkehrsnetzwerken eingesetzt, um Fahrzeug beeinflussende und/oder Fahrzeug überwachende Einheiten zu steuern und bezüglich der Funktionalität zu überwachen. Weiter dienen sie dazu Prozessdaten aufzunehmen und zurück an eine zentrale Steuerungs- und/oder Überwachungszentrale, wie zum Beispiel eine Leitstelle oder ein Stellwerk, zu melden. Als zugbeeinflussende Einheiten, die also Anweisungen an den Fahrzeugführer geben oder sogar direkt Eingriffe in der Fahrzeugsteuerung vornehmen oder direkt einen sicheren Fahrweg einstellen, können beispielsweise Signale, Weichen, Balisen, Linienleiter, Gleismagnete und dergleichen sowie auch Sensoren zum Erfassen von Prozessgrössen des fahrenden Zuges, wie Leistungsaufnahme, Geschwindigkeit und dergleichen, betrachtet werden. Als Zug- und Gleisabschnitt überwachende Einheiten können ebenfalls Balisen und Linienleiter, aber auch Achszähler und Gleisstromkreise und andere Gleisfreimeldesysteme genannt werden. Grundsätzlich betrifft die vorliegende Erfindung aber alle industriellen Anlagen, in denen funktionale Einheiten über grössere Strecken verteilt sind und dennoch zentral gesteuert werden müssen. Die zentrale Steuerung kann dabei von einer ortsfesten Leitstelle, aber auch durch eine nicht-ortsfeste virtuelle Leitstelle wahrgenommen werden.

Aus dem Projekt Sinet^{®} der Siemens Mobility AG, Wallisellen, Schweiz, und der dazu korrespondierenden europäischen Patentanmeldung EP 2 301 202 A1 sind eine Einrichtung und ein Verfahren zur Steuerung und/oder Überwachung von entlang eines Verkehrsnetzwerks angeordneten dezentralen Funktionseinheiten bekannt, welche folgenden Kernpunkte umfassen:
a) ein übergeordnetes Steuerungssystem, das mit den dezentralen Funktionseinheiten mittels Datentelegrammen Informationen austauscht,
b) ein Datentransportnetzwerk mit einer Anzahl von Netzzugangspunkten, wobei das übergeordnete Steuerungssystem über mindestens einen Netzzugangspunkt an dem Datentransportnetzwerk angekoppelt ist;
c) Kommunikationseinheiten, die jeweils an einem Netzzugangspunkt angeschlossen sind, wobei:
d) die dezentralen Funktionseinheiten zu Untergruppen mit jeweils eigenem Subnetzwerk zusammengefasst sind; und wobei
e) das Subnetzwerk jeder der Untergruppen an jedem seiner beiden Ende jeweils über eine Kommunikationseinheit und über einem Netzzugangspunkt an dem Datentransportnetzwerk angekoppelt ist.

Auf diese Weise kann für die Ankopplung der dezentralen Funktionseinheiten ein digitales Datentransportnetzwerk genutzt werden, welches in jeder Weise robust gegen ein einfaches Fehlerereignis ist, dennoch eine sehr geschickte Verwendung von sehr breit in der Bahntechnik eingesetzten Cu-Kabeln, zum Beispiel bisher vorhandenen Stellwerkskabeln, erlaubt und schliesslich auch nur eine vergleichsweise geringe Zahl von Netzzugangspunkten benötigt.

Eine derartige Einrichtung ist dabei in besonders vorteilhafter Weise für ein Schienennetz für den Eisenbahnverkehr einsetzbar. Folglich ist dann zweckmässig, mittels den dezentralen Funktionseinheiten verkehrsüberwachende und verkehrssteuernde Funktionseinheiten, wie insbesondere Signale, Weichen, Achszähler, Gleisstromkreise, punkt- und linienförmige Zugbeeinflussungselemente, an das Datentransportnetzwerk anzukoppeln.

Der Aufbau von technischen Anlagen, besonders auch in der Bahninfrastruktur, ist aufgrund der über 100 jährigen Geschichte des Industrieanlagenbaus und des Eisenbahnwesens auf Robustheit und Zuverlässigkeit ausgelegt. In der damaligen Konzeption wurden besonders die Aussenelemente der Bahnsicherungsanlagen über relativ kräftige Kabeladern angeschlossen, um die Schaltzustände über die definierten Distanzen sicher detektieren zu können, d.h. die Auslegung erfolgt entsprechend der Spitzenbelastungen mit ausreichender Reserve. Mit dem Schaltvorgang der Aussenelemente wird über die Energiezuführung auch die Information übermittelt. Daraus folgt aber in naheliegender Weise auch, dass die möglichen Distanzen durch den detektierbaren Energiefluss begrenzt sind. Unter heutigen Flexibilitäts-, Kosten- und ressourcenpolitischen Aspekten sind diese etablierten Konzepte neben der durch die EP 2 301 202 A1 offenbarten Kommunikationsstruktur dringend auch im Bereich der Energiezuführung zu innovieren und so die bisherige Kopplung von Information und Energie aufzulösen.

Zur Lösung einer dezentralen Energieversorgung der dezentralen Funktionseinheiten offenbart die internationalen Patentanmeldung WO 2013/013908 A1 eine Lösung im Rahmen des Produkts Sigrid^{®} der Siemens Mobility AG, Schweiz. Diese Lösung sieht eine Einrichtung und ein Verfahren zum Betreiben von in einer industriellen Anlage angeordneten dezentralen Funktionseinheiten vor, umfassend:
a) ein übergeordnetes Steuerungssystem, das mit den dezentralen Funktionseinheiten mittels Datentelegrammen Informationen austauscht,
b) ein Datentransportnetzwerk mit einer Anzahl von Netzzugangspunkten, wobei das übergeordnete Steuerungssystem über mindestens einen Netzzugangspunkt an dem Datentransportnetzwerk angekoppelt ist;
c) Kommunikationseinheiten, die an einem Netzzugangspunkt angeschlossen sind und den dezentralen Funktionseinheiten den Zugang zu dem Datentransportnetzwerk bereitstellen, und
d) ein Energietransportnetz, an das die dezentralen Funktionseinheiten angeschlossen sind und das die dezentralen Funktionseinheiten mit elektrischer Energie versorgt. Auf diese Weise ist nun auch das Energietransportnetz vollkommen von einem Stellwerk entkoppelt.

Ausgehend von der heutigen Stellwerkarchitektur mit dezentralen Stationen, aber Punkt-zu-Punkt-Energiezuführung, wird hiermit ein neuer, innovativer Ansatz beschritten. Die heutigen kabel- und arbeitsintensiven Punkt- zu Punkt-Verbindungen für die Stromversorgung bzw. die Energieversorgung der peripheren Elemente entlang dem Gleis (Element Controller oder auch dezentrale Funktionseinheit genannt) werden ersetzt durch adernsparende und einfach zu montierende Bus- oder Ringleitungen.

Die in der WO 2013/013908 A1 offenbarte Lösung beschränkt sich aber längst nicht nur auf den beschriebenen Anwendungsfall der Stellwerksarchitektur von Bahnanlagen, sondern geht weit darüber hinaus. Als zukünftige Beispiele werden das Energiemanagement für Gebäude oder für Grossanlagen in der produzierenden oder verarbeitenden Industrie auf der Basis dezentraler Energieversorgung gesehen.

Wenn der Energiebus zwischen zwei Stellwerken oder sonstigen Einrichtungen mit Anschluss zu den Energieversorgungsnetzen verlegt wird, so kann die Versorgung der angeschlossenen Verbraucher (dezentrale Funktionseinheiten) von beiden Speiseseiten erfolgen. Dadurch wird eine bisher noch nicht verfügbare Redundanz der Energieversorgung geschaffen. Die dezentralen Funktionseinheiten - auch Element Controller oder kurz EC genannt) werden dabei durch Netzknoteneinheiten - auch Buskoppler oder kurz SND - Smart Node Device genannt - an den Energiebus und optional auch an den Datenbus angeschlossen, die Steuerungs-, Überwachungs- und Diagnosefunktionen übernehmen können. Die SND können beispielsweise den Energiebus unterbrechen bzw. durchschalten, sowie Ströme und Spannungen im Energiebus messen.

Einfache Defekte, also beispielsweise Kurzschlüsse oder Unterbrüche, im Energiebus führen bei korrekter Behandlung aufgrund der Redundanz nicht unmittelbar zu einem Ausfall von Elementen. Im Fall einer ausfallenden Speiseseite würde die Versorgung aller dezentralen Funktionselemente von der zweiten Speiseseite übernommen. Ein Verfahren und System zur entsprechende Behandlung und Unterbindung von Kurzschlüssen des Energiebusses sind aus der europäischen Patentanmeldung EP 3 109 128 A1 bekannt. Zentral sind hierbei die Steuerungsmechanismen und die Netzknoteneinheiten, die den Energiebus im Fehlerfall selektiv zu jeder der beiden Einkopplungsseiten auftrennen können.

Zur Wahrnehmung ihrer Aufgabe verfügen die Netzknoteneinheiten über eine Logikeinheit, die in der Regel auf ein Betriebssystem, wie Windows oder dergleichen, gestützt sein kann. Die Logikeinheit kann aber auch als betriebssystemlose Rechnereinheit konzipiert sein, wie sie beispielsweise durch einen entsprechend programmierten FPGA realisierbar sein kann. Beim einem Ausfall des Energiebusses oder bei einem Neustart kann der Energiebus daher erst dann wieder korrekt in Betrieb genommen werden, wenn u.a. auch die Kurzschlussüberwachung in den Netzknoteneinheiten ihren Betrieb aufgenommen hat, also wenn die Logikprogramme entsprechend aufgestartet worden sind und korrekt ausgeführt werden.

Da in dem Energiebus zwischen den beiden Einspeisepunkten mehrere Netzknoteneinheiten perlenkettenartig nacheinander aufgereiht sind, ist die Zeit, die eine Netzknoteneinheit zum Aufstarten benötigt, von grosser Wichtigkeit. Im vorstehend genannten Produkt Sigrid^{®} können zwischen den beiden Einspeisepunkten maximal 16 Netzknoteneinheiten angeordnet werden, was aber bei einer übergangsweise nur einseitigen Einspeisung heissen kann, dass erst der Neustart aller 16 Netzknoteneinheiten abgewartet werden muss, bis der Energiebus wieder ordnungsgemäss aufgestartet worden ist. Selbst bei einer angenommenen Aufstartzeitdauer von 30 Sekunden pro Netzknoteneinheit benötigt der Neustart des Energiebusses etwa 8 Minuten, bis die Spannung des Energiebusses auch an die letzte der 16 Netzknoteneinheiten durchgeschaltet worden ist, da ein Durchschalten des Energiebusses erst dann zur nächstliegend in der Kette angeordneten Netzknoteneinheit erfolgen kann, wenn die zuvor angeordnete Netzknoteneinheit korrekt in Betrieb gegangen und ihre elementaren Busprüfungsfunktionen, wie z.B. Spannungsmessung und Ermittlung allfälliger Fehlerströme, erfolgreich abgeschliessen konnte.

Im Interesse des Bahnbetreibers ist es aber natürlich, dass der Energiebus nach einem Neustart oder bei Störungen möglichst schnell wieder hochgefahren werden kann.

EP 3 415 399 B1 bezieht sich auf ein System zur ausfallsicheren Versorgung eines elektrischen Verbrauchers mit einem redundant ausgeführten Energiebus, wobei der Verbraucher automatisch eingeschaltet wird, wenn eine Spannung auf dem Energiebus vorliegt. EP 3 247 015 A1 offenbart eine Stromversorgungseinrichtung zur Versorgung mehrerer Verbraucher über einen Energiebus, wobei ein Verbraucher-Busankoppelelement zunächst den zugeordneten Verbraucher einschaltet und dann den Energiebus zum nächsten Verbraucher-Busankoppelelement durchschaltet.

Der vorliegenden Erfindung liegt daher die Aufgabe zugrunde, ein System zum kontrollierten Schnellstart und Betrieb eines zur ausfallsicheren Versorgung einer Anzahl von elektrischen Verbrauchern vorgesehenen redundant ausgeführten Energiebusses anzugeben, bei dem das Zuschalten des Lastschalter zur Anschaltung des elektrischen Verbrauchers in vergleichsweise kurzer Zeit kontrolliert ausgeführt werden kann und trotzdem sichergestellt ist, dass die notwendigen elementaren Busprüfungen erfolgreich abgeschlossen werden können. Diese Aufgabe wird erfindungsgemäss durch ein System zum kontrollierten Starten und Betreiben eines zur ausfallsicheren Versorgung einer Anzahl von elektrischen Verbrauchern vorgesehenen redundant ausgeführten Energiebusses, über den in einer industriellen Anlage, insbesondere einer bahntechnischen Anlage, angeordnete dezentrale als elektrische Verbraucher charakterisierbare Funktionseinheiten mit elektrischer Energie versorgbar sind, wobei:
a) das System eine Anzahl von Netzknoteneinheiten umfasst, die sequentiell zwischen zwei Speisepunkten eines ringartig aufgebauten Energiebusses angeordnet sind und die dazu eingerichtet sind, den dezentralen Funktionseinheiten den Zugang zu dem Energiebus und optional auch zu einem Datenbus bereitzustellen,
b) jede Netzknoteneinheit eine Logikeinheit, eine Rechnereinheit und ein Schaltmodul aufweist, wobei die Logikeinheit dazu eingerichtet ist, das Schaltmodul zu steuern,
c) jedes Schaltmodul mindestens einen von der Logikeinheit steuerbaren Schalter zur Schaltung eines elektrischen Versorgungszugangs zu den beiden Speisepunkten des Energiebusses und mindestens einen weiteren von der Logikeinheit steuerbaren Lastschalter für einen elektrischen Versorgungszugang zu der dezentralen Funktionseinheit aufweist,
d) in einem Steuerkreis des Lastschalters ein RC-Glied und ein Komparator eingebracht sind und die Logikeinheit hinsichtlich ihres Aufstartens sc ausgestaltet ist, dass:
   d1) eine mittels des RC-Glieds und des Komparators erzielte Verzögerungszeit länger ist als die zum Aufstart der Logikeinheit benötigte Zeitdauer; und
   d2) eine von der Logikeinheit steuerbare Beeinflussungseinheit, insbesondere ein Optokoppler, für den Kondensator des RC-Gliedes vorgesehen ist, mit der die Spannung über dem Kondensator kurzschliessbar ist und damit das ansonsten bei Vorliegen der Versorgungsspannung des Energiebusses an der Netzknoteneinheit projektierte automatische Einschalten des Lastschalters verhinderbar ist.

Auf diese Weise kann ein koordinierter Schnellstart des Energiebusses vorgenommen werden, weil die Logikeinheit mit Anliegen ihrer Versorgungsspannung, beispielsweise der Spannung des Energiebusses, aufstarten kann und die Anschaltung des dritten Schalters (Lastschalters; dieser kann auch aus zwei Schaltern bestehen) über die für das Aufstarten benötigte Zeitdauer hinaus durch die entsprechende Beschaltung/Dimensionierung des RC-Gliedes verzögert werden kann. Die Logikeinheit kann so den Lastschalter kontrolliert geöffnet halten, bis alle vorgesehenen Überwachungsfunktionen, z.B. Kurzschlussüberprüfung, Beeinflussungsspannung usw., abgeschlossen sind und eine definierbare Einschaltverzögerung bzw. dann ein definiertes Schliessen des Lastschalters vorgenommen werden kann. Somit ist verhindert, dass es beispielsweise bei einer sofortigen Anschaltung des Lastschalters zu unerkannten Kurzschlüssen und/oder toggelnden Schaltern kommen kann.

Wie schon oben ausgeführt, kann die Logikeinheit weiter so ertüchtigt sein, dass nach erfolgreichem Abschluss der Prüfung des Energiebusses die Spannung des Energiebusses zu der im Energiebus nächstliegend angeordneten Netzknoteneinheit durchgeschaltet werden kann. Somit werden der erste und der zweite Schalter durch die Logikeinheit entsprechend gesteuert, wenn die Logikschaltung aktiv die Betriebsbereitschaft des Energiebusses detektiert hat. Damit bietet die Erfindung auch eine Lösung für den passiven Vorgang an, der im Falle des Ausfalls der Logikeinheit automatisch durchschaltet. Damit wird die Verfügbarkeit der Energieversorgung eines EC auch bei Ausfall der Logikeinheit sichergestellt (einfach ohne Kurzschluss- und Spannungsüberwachung im Bus). Wichtig ist die hohe Verfügbarkeit der Versorgung des EC, damit die Verfügbarkeit nicht von all den Schaltelementen in der Logik beeinflusst wird.

Sinnvollerweise kann die Prüfung des Energiebusses eine Prüfung der an der Netzknoteneinheit anliegenden Spannung und/oder eine Prüfung auf Fehlerströme, wie z.B. einen Kurzschlussstrom, umfassen.

Zur aktiven Steuerung des Lastschalters (dritter Schalter bzw. der zwei Schalter der dritten Schaltgruppe) kann die Logikeinheit nach dem erfolgreichen Start ihrer Logikfunktion und/oder der erfolgreichen Absolvierung der Prüfung des Energiebusses die Beeinflussungseinheit so ansteuern, dass der Kurzschluss der über dem Kondensator anliegenden Spannung beseitigt ist. Somit wird dann durch die sich über dem Kondensator aufbauende Spannung das Durchschalten des Komparators bewirkt, was dann zum Schliessen des Lastschalters führt.

Weitere vorteilhafte Ausgestaltungen der vorliegenden Erfindung sind den übrigen Unteransprüchen zu entnehmen. Vorteilhafte Ausführungsbeispiele der vorliegenden Erfindung werden anhand der Zeichnung näher erläutert. Dabei zeigen:
- Figur 1: in schematischer Ansicht eine Stellwerkarchitektur mit einem Datenbus und einem Energiebus;
- Figur 2: in schematischer Ansicht eine Netzknoteneinheit zur Verbindung einer dezentralen Funktionseinheit mit dem Datenbus und Energiebus;
- Figur 3: schematisch die Beschaltung eines in der Netzknoteneinheit zur Steuerung des Lastschalters verwendeten RC-Gliedes; und
- Figur 4: schematisch eine alternative Ausgestaltung des in einer Netzknoteneinheit integrierten Schaltmoduls.

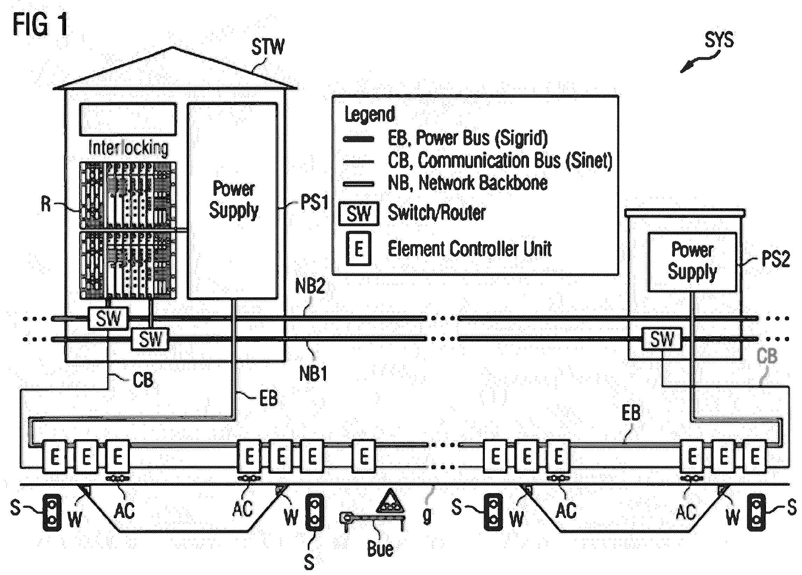

Figur 1 zeigt schematisch eine Stellwerkarchitektur mit einem System Sys, das u.a. ein Stellwerk STW, einen redunant aufgebauten Datenbackbone NB1, NB2, einen Datenbus CB und einen Energiebus EB mit zwei Speisestellen PS1 und PS2 aufweist. Das Stellwerk STW steuert einen Zugverkehr auf einem Gleisabschnitt G, in welchem Signale S, Weichen W, ein Bahnübergang Bue und Achszähler AC angeordnet sind. Diese Zugsicherungs- und Zugbeeinflussungskomponenten koppeln jeweils mit einer dezentralen Funktionseinheit - auch Element Controller Unit E genannt - an dem Datenbus CB und dem Energiebus EB an. Die dezentralen Funktionseinheiten E sind dabei so an den ringförmigen Datenbus CB angeschlossen, dass über jede Seite des ringförmigen Datenbusses CB entweder der Zugriff auf den Datenbackbone NB1 bzw. NB2 gegeben ist.

Der Datenbus CB koppelt dabei mit entsprechenden Routern/Switches SW an dem jeweiligen Datenbackbone NB1, NB2 an. Zudem gewährleistet der sequentielle Anschluss der Element Controller Unit E an dem ringförmigen Energiebus, dass jede Element Controller Unit E von beiden Seiten her und damit redundant mit elektrischer Energie versorgt werden kann.

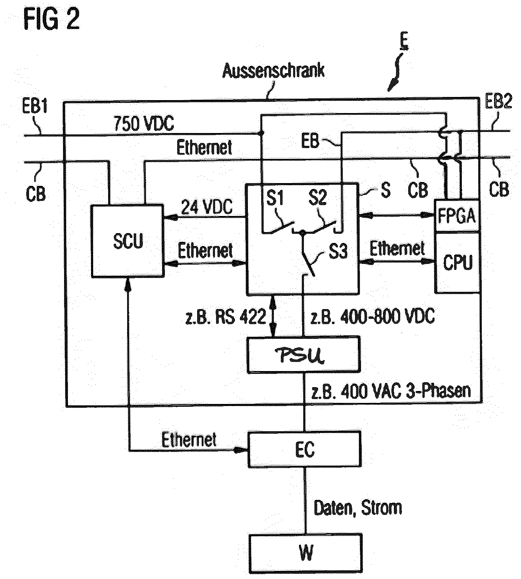

Figur 2 zeigt nun schematisch die daten- und energieversorgungstechnische Anschaltung der Element Controller Unit E einer Zugbeeinflussungskomponente, hier zum Beispiel einer Weiche W, an den Datenbus CB und den Energiebus EB. Ein derartiger Anschaltpunkt umfasst eine Netzknoteneinheit SND und den eigentlichen Element Controller EC. Die Netzknoteneinheit SND umfasst eine Kommunikationseinheit SCU zum Datenaustausch über beide Äste des Datenbusses CB. Energieseitig ist die Netzknoteneinheit SND so ausgestaltet, dass sie an beiden Ästen EB1, EB2 des Energiebusses EB ankoppelt und damit immer, ggfs. über andere Netzknoteneinheiten SND hinweg - ein Zugang zu beiden Einspeisepunkten PS1 und PS2 besteht (wie in Figur 1 gezeigt).

Die Netzknoteneinheit SND verfügt weiter über eine Logikeinheit FPGA und eine Rechnereinheit CPU, wobei ein Schaltmodul S von der Logikeinheit FPGA gesteuert wird, die zugleich auch den Zustand des an der Netzknoteneinheit SND anliegenden Energiebusses EB überwacht. Im Besonderen detektiert die Logikeinheit FPGA Stromüberschreitungen und/oder Spannungseinbrüche innerhalb des Energiebusses EB und/oder beim angeschlossenen Verbraucher (PSU mit EC) und wertet diese Daten auf einen möglicherweise vorliegenden Kurzschluss aus.

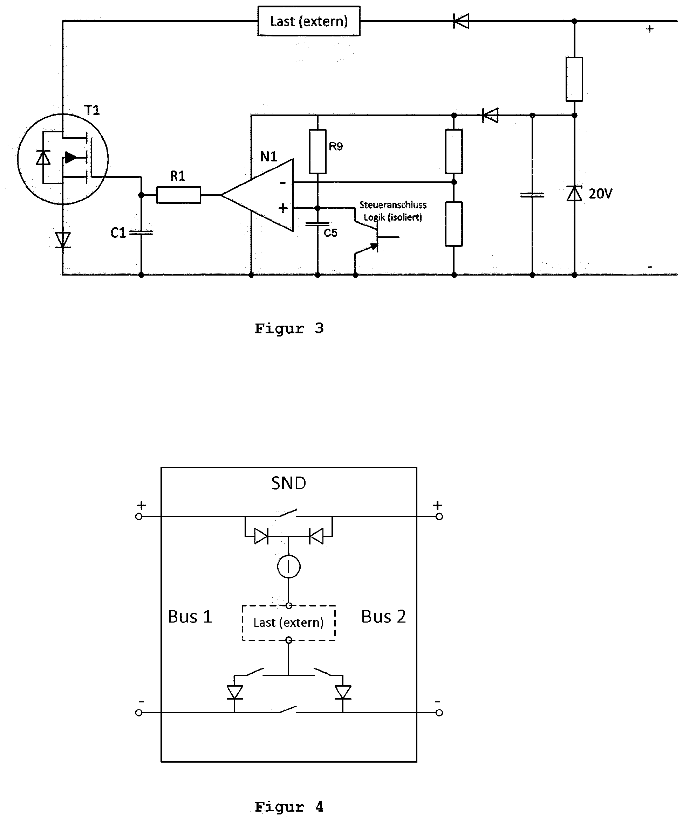

Somit wird die Netzknoteneinheit SND immer in redundanter Weise von zwei Seiten her mit elektrischer Energie versorgt und verfügt daher im Rahmen des Schaltmoduls S über einen linken Schalter S1 und einen rechten Schalter S2 sowie über einen Lastschalter S3 zur Versorgungseinheit PSU des Element Controllers EC. Alternativ kann das Schaltmodul S auch wie in Figur 4 gezeigt ausgestaltet sein.

Die Netzknoteneinheit SND versorgt auch eine Kommunikationseinheit SCU mit Spannung und kann mit dieser auch über eine Ethernet-Verbindung Daten austauschen und ist damit in den Datenbus CB eingebunden (z.B. Aktivieren des Handbetriebs der Netzknoteneinheit SND über Fernzugriff und Betätigen der Schalter S1 bis S3, Abgabe von Diagnosedaten an das Stellwerk STW oder ein übergeordnetes Service- und Diagnosesytem, Abfrage der aktuellen Spannungen, Ströme, Energie- und Leistungswerte, Parametrierung der Netzknoteneinheit SND, Daten für Aufladung eines hier nicht weiter dargestellten Energiespeichers oder die Anmeldung eines zukünftigen Leistungsbedarfs). In die Netzknoteneinheit SND ist hier über den Schalter S3 die Versorgungseinheit PSU integriert, die die Spannung des Energiebusses EB auf die für den Element Controller EC erforderliche Eingangsspannung konvertiert.

Zudem kann eine Datenverbindung zwischen dem Schaltmodul S der Netzknoteneinheit SND und der Versorgungseinheit PSU, z.B. in Form einer serielle RS 422 oder Ethernet, vorgesehen sein. Energietechnisch typisch ist hier zum Beispiel eine dreiphasige Verbindung mit 400 VAC. Der Element Controller EC steuert und versorgt in Figur 2 vorliegend die Weiche W. Dabei empfängt der Element Controller EC Datentelegramme von einem übergeordneten Stellwerksrechner R via einer Ethernet-Verbindung von der Kommunikationseinheit SCU und gibt über diese Kommunikationseinheit SCU die Rückmeldungen an den Stellwerksrechner R. Der Stellwerksrechner R kann auch ein entsprechendes Auswertemodul repräsentieren, dass die empfangenen Daten bestimmungsgemäss auswertet. Alternativ ist es auch möglich auf der Netzknoteneinheit SND die Rechnereinheit CPU dahingehend zu ertüchtigen, einen Grossteil der weiter o.g. genannten Aufgaben direkt auf der Netzknoteneinheit SND wahrnehmen zu können.

Der Logikeinheit FPGA kommt nun beispielsweise beim Aufstarten des Energiebusses EB eine besondere Rolle zu. Einmal angenommen, dass die Netzknoteneinheit SND noch eine weitere Anzahl auf dem linken Ast EB1 benachbart angeordnete und dabei perlenkettenartig aufgereihte Netzknoteneinheiten aufweist, kann beispielsweise bei einem Aufstarten des Energiebusses EB die Anforderung bestehen, dass zehn und mehr Netzknoteneinheiten in Betrieb zu nehmen sind. Da die Logikeineinheit FPGA sofort (in der Regel innerhalb von Millisekunden) betriebsbereit ist und die Steuerung des Schaltmoduls S übernimmt, kann die Rechnereinheit CPU ihre Kontroll- und Steuerprogramme erst dann ausführen kann, wenn die Dienstprogramme entsprechend gestartet sind und dann ausgeführt werden. Dieser Vorgang kann beispielsweise bei einer Energieversorgung nur über den rechten Ast EB2 pro Netzknoteneinheit SND etwa 60 Sekunden dauern, bis die Rechnereinheit CPU Steuersignale an die Logikeinheit FPGA liefern kann, die dann entsprechend der empfangenen Steuersignale das Schaltmoduls S entsprechend ansteuert.

Nach Aufstart arbeitet die Logikeinheit FPGA daher eine elementare Prüfung des Energiebusses EB ab, wie Spannungsmessung und Kurzschlussprüfung, und kann daher bei einer erfolgreichen Prüfung bereits nach einigen Millisekunden den linken und den rechten Schalter S1 bzw. S2 zur Durchschalten des Energiebusses EB an die nächstliegend angeordnete Netzknoteneinheit SND aktivieren. Somit wird der Energiebus EB bei Vorliegen von ordnungsgemässen Betriebsparametern bereits für alle darin eingebundenen Netzknoteneinheiten in einer Zeit von wenigen Sekunden aktiviert und ein Hochstarten der Rechnereinheiten CPU auf allen in den Energiebus EB integrierten Netzknoteneinheiten SND kann daher weitgehend parallel erfolgen.

Ist dann die Rechnereinheit CPU voll funktionsfähig, übernimmt diese die Ansteuerung der Logikeinheit FPGA, welche dann mit den von der Rechnereinheit CPU empfangenen Steuersignale das Schaltmoduls S steuert. Sie kann dann auch eine Automatik-Schaltung «entmachten», die bei einem Ausfall der Logikschaltung sicherstellen würde, dass der Lastschalter geschlossen ist. Kommt es dann aber beispielsweise während des Betriebs zum einer Störung oder Ausfall der Logikeinheit FPGA , übernimmt die Automatik-Schaltung das Schliessen des Lastschalters und des erstens und zweiten Schalters. Selbstverständlich wird in diesem Fall auch noch eine Fehlermeldung an ein übergeordnetes Kontrollsystem abgesetzt, die auf die Notwendigkeit des Austausches der defekten Logikeinheit FPGA hinweist.

Somit steht die Überwachungslogik für den Energiebus EB quasi mit dem Vorliegen der Busspannung zur Verfügung und die Durchschaltung der Busspannung zu den weiteren Netzknoteneinheiten SND kann sehr schnell erfolgen, weil der Startvorgang des Aufstarts der Logikfunktionen der Netzknoteneinheit in zwei Stufen aufgeteilt ist, die unabhängig voneinander ablaufen. Mit dem Start der Logikeinheit FPGA wird die Überwachungslogik für den Energiebus EB aufgestartet.

Während dieser Zeit sorgt ein in das von der Logikeinheit FPGA kommende Steuersignal des Lastschalters eingebrachtes und entsprechend beschaltetes RC-Glied mit Komparator - so wie beispielsweise in Figur 3 gezeigt - dafür, dass das Schliessen des Lastschalters S3 mit einer grösseren Zeitverzögerung erfolgt als zum Aufstart der Logikeinheit FPGA erforderlich ist. Somit ist die Logikeinheit FPGA sicher aufgestartet, bevor diese Verzögerungszeit abgelaufen ist. Somit führt die Logikeinheit FPGA zunächst die vorgesehenen Überprüfungen des Energiebusses EB durch und kann bei erfolgreich abgeschlossener Prüfung des Energiebusses EB des Lastschalter S3 aktiv schliessen.

Wie in Figur 3 gezeigt, ist die Logikeinheit FPGA hinsichtlich ihres Aufstartens so ausgestaltet, dass: die mittels des in den Steuerkreis für den Lastschalter S3 eingebrachten RC-Glieds und eines Komparators erzielte Verzögerungszeit länger ist als die zum Aufstart der Logikeinheit benötigte Zeitdauer; und eine von der Logikeinheit steuerbare Beeinflussungseinheit, hier ein Optokoppler, für den Kondensator des RC-Gliedes vorgesehen ist, mit der die Spannung über dem Kondensator kurzschliessbar ist und damit das ansonsten bei Vorliegen der Versorgungsspannung des Energiebusses an der Netzknoteneinheit projektierte automatische Einschalten des dritten Schalters verhindert wird.

Hierzu ist das RC-Glied nun wie in Figur 3 dargestellt ausgestaltet worden. Die Schaltung zeigt u.a. eine Spannungsversorgung ab Busspannung, den Komparator mit RC Glied (R9 / C5) für die Zeitverzögerung, sowie den Schalter T4.

## Patentansprüche

1. System (Sys) zum kontrollierten Starten und Betreiben eines zur ausfallsicheren Versorgung einer Anzahl von elektrischen Verbrauchern (E) vorgesehenen redundant ausgeführten Energiebusses (EB), über den in einer industriellen Anlage, insbesondere einer bahntechnischen Anlage, angeordnete dezentrale als elektrische Verbraucher charakterisierbare Funktionseinheiten (E, S, W, Bue, AC) mit elektrischer Energie versorgbar sind, wobei:
a) das System (Sys) eine Anzahl von Netzknoteneinheiten (SND) umfasst, die sequentiell zwischen zwei Speisepunkten (PS1, PS2) eines ringartig aufgebauten Energiebusses (EB) angeordnet sind und die dazu eingerichtet sind, den dezentralen Funktionseinheiten (E) den Zugang zu dem Energiebus (EB) und optional auch zu einem Datenbus (CB) bereitzustellen,
b) jede Netzknoteneinheit (SND) eine Logikeinheit (FPGA), eine Rechnereinheit (CPU) und ein Schaltmodul (S) aufweist, wobei die Logikeinheit (FPGA) dazu eingerichtet ist, das Schaltmodul (S) zu steuern,
c) jedes Schaltmodul (S) mindestens einen von der Logikeinheit (FPGA) steuerbaren Schalter (S1, S2) zur Schaltung eines elektrischen Versorgungszugangs zu den beiden Speisepunkten (PS1, PS2) des Energiebusses (EB) und mindestens einen weiteren von der Logikeinheit (FPGA) steuerbaren Lastschalter (S3) für einen elektrischen Versorgungszugang zu der dezentralen Funktionseinheit (E) aufweist,
**dadurch gekennzeichnet, dass**
d) in einem Steuerkreis des Lastschalters (S3) ein RC-Glied (R9, C5) und ein Komparator (N1) eingebracht sind und die Logikeinheit (FPGA) hinsichtlich ihres Aufstartens so ausgestaltet ist, dass:
d1) eine mittels des eingebrachten RC-Glieds (R9, C5) und des Komparators (N1) erzielte Verzögerungszeit länger ist als die zum Aufstart der Logikeinheit (FPGA) benötigte Zeitdauer; und
d2) eine von der Logikeinheit (FPGA) steuerbare Beeinflussungseinheit, insbesondere ein Optokoppler, für den Kondensator (C5) des RC-Gliedes (R9, C5) vorgesehen ist, mit der die Spannung über dem Kondensator (C5) kurzschliessbar ist und damit das ansonsten bei Vorliegen der Versorgungsspannung des Energiebusses (EB) an der Netzknoteneinheit (SND) projektierte automatische Einschalten des Lastschalters (S3) verhinderbar ist.

2. System (Sys) nach Anspruch 1, **dadurch gekennzeichnet, dass**
die Logikeinheit (FPGA) dazu eingerichtet ist, nach erfolgreichem Aufstarten und Abschluss der Prüfung des Energiebusses (EB), die Spannung des Energiebusses zu der im Energiebus nächstliegend angeordneten Netzknoteneinheit (SND) durchzuschalten.

3. System (Sys) nach Anspruch 1 oder 2, **dadurch gekennzeichnet, dass**
die Prüfung des Energiebusses (EB) eine Prüfung der an der Netzknoteneinheit (SND) anliegenden Spannung und/oder eine Prüfung auf Fehlerströme, wie z.B. einen Kurzschlussstrom, umfasst.

4. System (Sys) nach einem der Ansprüche 1 bis 3, **dadurch gekennzeichnet, dass**
die Logikeinheit (FPGA) dazu eingerichtet ist, nach dem erfolgreichen Start ihrer Logikfunktion und/oder der erfolgreichen Absolvierung der Prüfung des Energiebusses (EB), die Beeinflussungseinheit so anzusteuern, dass der Kurzschluss der über dem Kondensator (C5) anliegenden Spannung beseitigt ist.

5. System (Sys) nach einem der Ansprüche 1 bis 4, **dadurch gekennzeichnet, dass**
jedes Schaltmodul (S) einen ersten Schalter (S1), einen zweiten Schalter (S2) und als Lastschalter (S3) einen dritten Schalter (S3) umfasst, wobei mit dem ersten und dem zweiten von der Logikeinheit (FPGA) steuerbaren Schalter (S1, S2) ein elektrischer Versorgungszugang zu den beiden Speisepunkten (PS1, PS2) des Energiebusses (EB) und mit dem dritten von der Logikeinheit (FPGA) steuerbaren Schalter (S3) ein elektrischer Versorgungszugang zu der dezentralen Funktionseinheit (E) schaltbar ist

6. System (Sys) nach einem der Ansprüche 1 bis 5, **dadurch gekennzeichnet, dass**
der dritte Schalter (S3) als Schaltelement ausgeführt ist, welches zu jedem Speisepunkt (PS1, PS2) des Energiebusses (EB) je einen separaten durch eine Komparatoranschaltung steuerbaren Schalter aufweist.

## Claims

1. System (Sys) for controlled starting and operating of a redundant energy bus (EB) provided for the failsafe supply to a number of electrical consumers (E), by way of which decentralized functional units (E, S, W, Bue, AC) which are arranged in an industrial installation, in particular a railway installation, and can be characterised as electrical consumers can be supplied with electrical energy,
wherein:
a) the system (Sys) comprises a number of network node units (SND), which are arranged sequentially between two feed points (PS1, PS2) of a ring-shaped energy bus (EB) and which are designed to provide the decentralized functional units (E) with access to the energy bus (EB) and optionally also to a databus (CB)
b) each network node unit (SND) has a logic unit (FPGA), a computer unit (CPU) and a switching module (S), wherein the logic unit (FPGA) is designed to control the switching module (S)
c) each switching module (S) has at least one switch (S1, S2) which can be controlled by the logic unit (FPGA) for switching an electrical supply access to the two feed points (PS1, PS2) of the energy bus (EB) and at least one further load switch (S3), which can be controlled by the logic unit (FPGA), for an electrical supply access to the decentralized functional unit (E),
**characterised in that**
d) an RC element (R9, C5) and a comparator (N1) are introduced into a control circuit of the load switch (S3) and the logic unit (FPGA) is designed in respect of its start-up so that d1) a delay time achieved by means of the introduced RC element (R9, C5) and the comparator (N1) is longer than the length of time required to start up the logic unit (FPGA) and d2) an influencing unit which can be controlled by the logic unit (FPGA), in particular an optocoupler, is provided for the capacitor (C5) of the RC element (R9, C5), with which the voltage over the capacitor (C5) can be short-circuited and the automatic switching-on of the load switch (S3), which is otherwise projected when the supply voltage of the energy bus (EB) is present on the network node unit (SND), can be prevented.

2. System (Sys) according to claim 1,
**characterised in that**
the logic unit (FPGA) is designed to connect through the voltage of the energy bus to the network node unit (SND) arranged nearest in the energy bus after successfully starting-up and completing the check of the energy bus (EB).

3. System (Sys) according to claim 1 or 2,
**characterised in that**
the check of the energy bus (EB) comprises a check of the voltage applied to the network node unit (SND) and/or a check for fault currents, such as e.g. a short-circuit current.

4. System (Sys) according to one of claims 1 to 3,
**characterised in that**
the logic unit (FPGA) is designed to control the influencing unit so that the short-circuit of the voltage applied by way of the capacitor (C5) is eliminated after the successful start of its logic function and/or the successful completion of the check of the energy bus (EB).

5. System (Sys) according to one of claims 1 to 4,
**characterised in that**
each switching module (S) comprises a first switch (S1), a second switch (S2) and a third switch (S3) as a load switch (S3), wherein with the first and the second switch (S1, S2) which can be controlled by the logic unit (FPGA), an electrical supply access to the two feed points (PS1, PS2) of the energy bus (EB) can be switched and with the third switch (S3) which can be controlled by the logic unit (FPGA), an electrical supply access to the decentralized functional unit (E) can be switched.

6. System (Sys) according to one of claims 1 to 5,
**characterised in that**
the third switch (S3) is designed as a switching element, which has a separate switch which can be controlled by a comparator connection at each feed point (PS1, PS2) of the energy bus (EB).

## Revendications

1. Système (Sys) pour le démarrage et le fonctionnement contrôlés d'un bus d'énergie (EB), conçu de manière redondante, prévu pour l'alimentation à sécurité intégrée de plusieurs consommateurs électriques (E), par l'intermédiaire duquel des unités fonctionnelles décentralisées (E, S, W, Bue, AC), caractérisables comme des consommateurs électriques, disposées dans une installation industrielle, plus particulièrement une installation ferroviaire, peuvent être alimentées en énergie électrique,
dans lequel :
a) le système (Sys) comprend plusieurs unités de noeuds de réseau (SND) qui sont disposés de manière séquentielle entre deux points d'alimentation (PS1, PS2) d'un bus d'énergie (EB) conçu de manière annulaire et qui sont conçues pour mettre à la disposition des unités fonctionnelles décentralisées (E) un accès au bus d'énergie (EB) et, en option, également à un bus de données (CB),
b) chaque unité de noeud de réseau (SND) présente une unité logique (FPGA), une unité de calcul (CPU) et un module de commutation (S), dans lequel l'unité logique (FPGA) est conçue pour contrôler le module de commutation (S),
c) chaque module de commutation (S) présente au moins un commutateur (S1, S2) pouvant être contrôlé par l'unité logique (FPGA), pour la commutation d'un accès à l'alimentation électrique aux deux points d'alimentation (PS1, PS2) du bus d'énergie (EB) et au moins un autre commutateur de charge (S3) pouvant être contrôlé par l'unité logique (FPGA), pour un accès à l'alimentation électrique de l'unité fonctionnelle décentralisée (E), **caractérisé en ce que**
d) dans un circuit de commande du commutateur de charge (S3), un élément RC (R9, C5) et un comparateur (N1) sont montés et l'unité logique (FPGA) est conçue, en ce qui concerne son démarrage, de sorte que :
d1) un temps de retard obtenu au moyen de l'élément RC (R9, C5) monté et du comparateur (N1) est plus long que le temps nécessaire pour le démarrage de l'unité logique (FPGA) ; et
d2) une unité d'interaction pouvant être contrôlé par l'unité logique (FPGA), plus particulièrement un optocoupleur, est prévue pour le condensateur (C5) de l'élément RC (R9, C5), avec laquelle la tension aux bornes du condensateur (C5) peut être court-circuitée et
la mise en marche automatique du commutateur de charge (S3) projetée peut ainsi être évitée lors de la présence de la tension d'alimentation du bus d'énergie (EB) au niveau de l'unité de noeud de réseau (SND).

2. Système (Sys) selon la revendication 1,
**caractérisé en ce que**
l'unité logique (FPGA) est conçue pour connecter, après un démarrage réussi et la fin de la vérification du bus d'énergie (EB), la tension du bus d'énergie à l'unité de noeud de réseau (SND) la plus proche dans le bus d'énergie.

3. Système (Sys) selon la revendication 1 ou 2,
**caractérisé en ce que**
la vérification du bus d'énergie (EB) comprend une vérification de la tension appliquée à l'unité de noeud de réseau (SND) et/ou une vérification des courants de défaut, par exemple un courant de court-circuit.

4. Système (Sys) selon l'une des revendications 1 à 3,
**caractérisé en ce que**
l'unité logique (FPGA) est conçue pour contrôler, après le démarrage réussi de sa fonction logique et/ou l'accomplissement réussi de la vérification du bus d'énergie (EB), l'unité d'interaction de sorte que le court-circuit de la tension appliquée aux bornes du condensateur (C5) est éliminée.

5. Système (Sys) selon l'une des revendications 1 à 4,
**caractérisé en ce que**
chaque module de commutation (S) comprend un premier commutateur (S1), un deuxième commutateur (S2) et un troisième commutateur (S3) en tant que commutateur de charge (S3), dans lequel, avec les premier et deuxième commutateurs (S1, S2), pouvant être contrôlés par l'unité logique (FPGA), un accès de l'alimentation électrique aux points d'alimentation (PS1, PS2) du bus d'énergie (EB) et avec le troisième commutateur (S3), pouvant être contrôlé par l'unité logique (FPGA), un accès de l'alimentation électrique à l'unité fonctionnelle décentralisée (E) peut être commuté.

6. Système (Sys) selon l'une des revendications 1 à 5,
**caractérisé en ce que**
le troisième commutateur (S3) est conçu comme un élément de commutation qui présente, à chaque point d'alimentation (PS1, PS2) du bus d'énergie (EB), un commutateur séparé pouvant être contrôlé par un circuit comparateur.
